# EUROPÄISCHE PATENTANMELDUNG

(11) **EP 0 813 019 A1**
(43) Veröffentlichungstag der Anmeldung: **17.12.1997**
(21) Anmeldenummer: 97105729.4
(22) Anmeldetag: 07.04.1997
(51) Int. Cl.: F16L 37/133, B05B 15/06

(54) **Schlauchkupplung für eine Pulver-Sprühbeschichtungsvorrichtung**

(30) Priorität: 12.06.1996 DE 19623367
(71) Anmelder: Gema Volstatic AG, 9015 St. Gallen (CH)
(72) Erfinder: Buschor, Karl, 9000 St. Gallen (CH)
(74) Vertreter: Vetter, Ewald Otto, Dipl.-Ing.

(57) **Zusammenfassung**

Pulver-Sprühbeschichtungsvorrichtung mit einer Schlauchkupplung (22) und einem Adapter (32) zur wahlweisen Verbindung eines Pulverschlauches (28) mit der Schlauchkupplung (22) entweder direkt oder über den Adapter (32).

## Beschreibung

Die Erfindung betrifft eine Pulver-Sprühbeschichtungsvorrichtung gemäß dem Oberbegriff von Anspruch 1.

Eine Pulver-Sprühbeschichtungsvorrichtung dieser Art ist aus Fig. 1 der DE 44 17 727 A1 bekannt.

Demgemäß können "Vorrichtungseinheiten", an welche ein Schlauch gemäß der Erfindung anschließbar ist, Pulver-Sprühpistolen, Pulver-Förderpumpen vorzugsweise in Form von Injektoren, Pulver-Filter, Zyklone zur Trennung des Pulvers von einem sie fördernden Druckluftstrom, Siebmaschinen, Pulverbehälter oder Beschichtungskabinen sein.

Die Pulver-Sprühbeschichtungsvorrichtung ist vorzugsweise derart ausgebildet, daß sie das Beschichtungspulver elektrostatisch auflädt. Eine elektrostatische Pulver-Sprühvorrichtung ist beispielsweise aus der US 4 196 465 bekannt.

Die Pulverförderung zwischen den einzelnen Vorrichtungseinheiten kann durch Schwerkraft, Saugluft oder Druckluft erfolgen. Bei der Förderung durch einen Schlauch hindurch muß sichergestellt werden, daß die Schlauchverbindung mit der Vorrichtungseinheit einerseits druckluftdicht und pulverdicht ist, jedoch andererseits leicht und schnell lösbar ist, damit der betreffende Schlauch in kurzer Zeit gegen einen anderen Schlauch ausgetauscht werden kann oder an den betreffenden Schlauch in kurzer Zeit eine andere Vorrichtungseinheit angeschlossen werden kann. Dieser schnelle Austausch von Schläuchen oder von Vorrichtungseinheiten ist insbesondere bei einem "Pulverwechsel" von großer Wichtigkeit, weil dabei keine Vermischungen von Pulverpartikeln des einen Pulvers mit dem anderen Pulver vorkommen dürfen. Deshalb werden beim Pulverwechsel der Pulver-Schlauch und/oder die Vorrichtungseinheiten gegen saubere ausgetauscht und dann die vorher benutzten gereinigt oder für eine spätere erneute Benutzung mit dem gleichen Beschichtungspulver aufbewahrt.

Die Verwendung von bekannten Schlauchkupplungen, wie sie beispielsweise aus der DE-A-28 40 648, DE-A-35 13 188 oder der DE-A-34 46 568 bekannt sind, hat sich als unbrauchbar erwiesen, weil häufig Undichtigkeiten oder Pulverablagerungen in den Schlauchkupplungen aufgetreten sind. Bei Versuchen im Rahmen der Erfindung hat sich gezeigt, daß Undichtigkeiten auch dadurch auftreten können, daß im Querschnitt theoretisch gleich große Schläuche in der Praxis trotzdem ungleiche Querschnittsabmessungen haben, entweder durch Maßungenauigkeiten bei der Schlauchherstellung und/oder in Abhängigkeit von der Umgebungstemperatur und der Alterung sich ändernde Querschnittsabmessungen.

Durch die Erfindung soll die Aufgabe gelöst werden, eine leicht und schnell lösbare Verbindungsvorrichtung zwischen einer Vorrichtungseinheit der Pulversprühbeschichtungsvorrichtung und einem Schlauch zu schaffen, welche druckluftdicht und pulverdicht ist, unabhängig von schwankenden Querschnittsabmessungen des Schlauches, welche durch Herstellungsungenauigkeiten und/oder durch Temperatureinflüsse bedingt sind.

Diese Aufgabe wird gemäß der Erfindung durch die kennzeichnenden Merkmale von Anspruch 1 gelöst.

Durch die Erfindung wird der Vorteil erzielt, daß die Schläuche schnell und austauschbar, jedoch trotzdem fest haltbar an die Vorrichtungseinheiten anschließbar sind; und daß die Schlauchverbindung in jedem Falle druckluftdicht und pulverdicht ist, auch dann, wenn der Schlauch oder die Schläuche durch Herstellungsungenauigkeit oder durch Temperatureinflüsse unterschiedliche oder sich ändernde Querschnittsabmessungen haben.

Die Erfindung wird im folgenden mit Bezug auf die Zeichnungen anhand einer bevorzugten Ausführungsform als Beispiel beschrieben. In den Zeichnungen zeigen
- Fig. 1: schematisch eine Pulver-Sprühbeschichtungsvorrichtung, in welcher die Erfindung Anwendung findet,
- Fig. 2: eine Seitenansicht, teilweise geschnitten, einer Pulver-Sprühpistole mit einer Schlauchkupplung nach der Erfindung,
- Fig. 3: einen Längsschnitt einer Schlauchkupplung in Kombination mit einem Adapter gemäß der Erfindung in Kupplungs-Entriegelungsposition,
- Fig. 4: einen Axialschnitt der Anordnung von Fig.3 in Kupplungs-Verriegelungsposition.

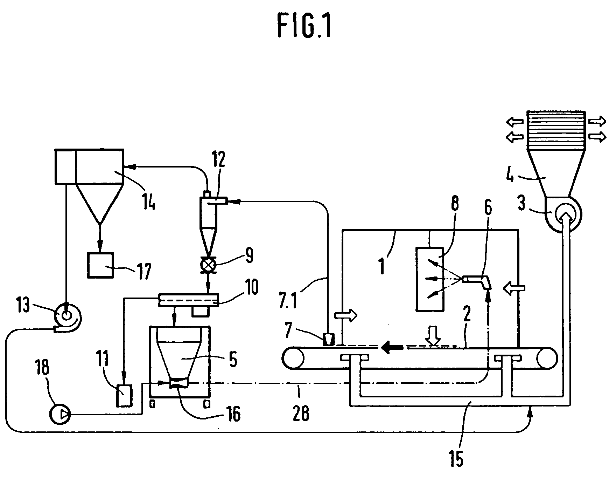

In Fig. 1 ist schematisch als Beispiel eine Pulver-Sprühbeschichtungsvorrichtung mit einer Kabine 1 dargestellt, deren Boden durch ein endloses, umlaufendes Filterband 2 gebildet ist. Das Filterband 2 fördert auf ihn fallendes überschüssiges Beschichtungspulver aus der Kabine 1 heraus. Außerhalb der Kabine wird das Pulver von einer Saugdüse 7 vom Filterband 2 abgesaugt und mittels eines Saugluftstromes durch einen Schlauch 7.1 zu einem Zyklon 12 gefördert. Aus dem unteren Ende des Zyklons 12 fällt von dem Saugluftstrom getrenntes Pulver durch eine Zellenradschleuse 9 in eine Siebmaschine 10 und dann in einen Pulverbehälter 5. Dem Pulverbehälter 5 wird zusätzlich zu diesem zurückgewonnenen Pulver auch frisches Pulver hinzugefügt. Beide Pulverarten werden im Pulverbehälter 5 mittels Druckluft fluidisiert. Der Saugluftstrom in der Saugdüse 7 wird von einem Gebläse 13 erzeugt, dessen Saugseite über eine Filtervorrichtung 14 an das obere Ende des Zyklons 12 strömungsmäßig angeschlossen ist. Die noch Pulverstaub enthaltende Saugluft wird in der Filtervorrichtung 14 filtriert und anschließend mittels des Gebläses 13 entweder in die Kabine 1 oder in die Außenatmosphäre oder entsprechend Fig. 1 in eine Absaugleitung 15 gefördert. Das stromabwärtige Ende der Absaugleitung 15 ist an die Saugseite eines weiteren Gebläses 3 angeschlossen, welches am stromaufwärtigen Anfang der Saugleitung 15 durch das Filterband 2 hindurch Luft aus der Kabine 1 absaugt und dann über einen Absolut-Filter 4 in die Außenatmosphäre bläst. Das im Pulverbehälter 5 vorhandene Pulver wird von einem als Förderpumpe wirkenden Injektor 16 pneumatisch einer Sprühvorrichtung 6 zugeführt, welche das Pulver in der Kabine 1 auf einen zu beschichtenden Gegenstand 8 sprüht. Dem Injektor 16 wird Luft einer Druckluftquelle 18, zum Beispiel ein Druckluftnetz einer Firma, zugeführt, welche im Injektor 16 Pulver aus dem Pulverbehälter 5 ansaugt und zur Sprühvorrichtung 6 fördert. Die einzelnen Vorrichtungseinheiten der Pulver-Sprühbeschichtungsvorrichtung sind in der Mehrzahl durch Schläuche miteinander verbunden, welche an die betreffende Vorrichtungseinheit mit einer nachfolgend beschriebenen Schlauchkupplung direkt oder über den nachfolgend ebenfalls beschriebenen Adapter indirekt anschlossen werden können. Solche Vorrichtungseinheiten, an welche ein Schlauch auf diese Weise angeschlossen werden kann, sind insbesondere die Saugdüse 7, der Zyklon 12, die Filtervorrichtung 14, die Gebläse 3 und 13, der Injektor 16 und die Sprühvorrichtung 6.

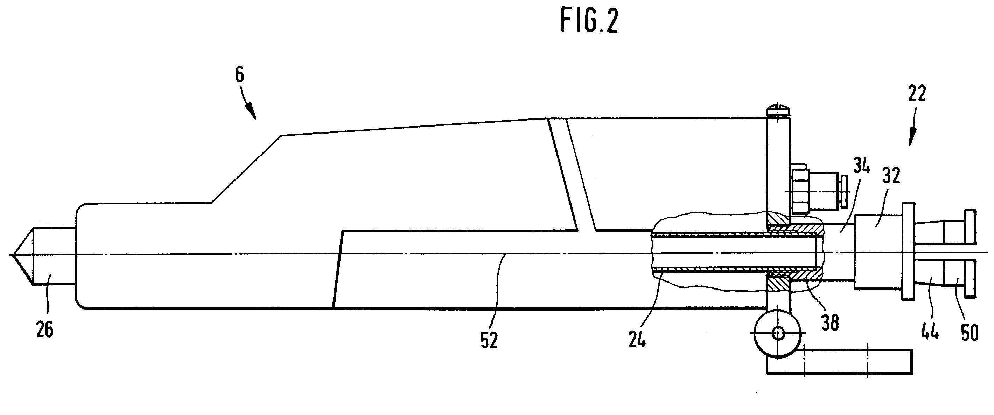

Gemäß Fig. 2 ist an dem hinteren Ende der Sprühvorrichtung 6 eine Schlauchkupplung 22 lösbar befestigt, welche mit dem hinteren Ende eines Pulverrohres 24 lösbar oder unlösbar verbunden ist. Das Pulverrohr 24 verbindet strömungsmäßig die Schlauchkupplung 22 mit einem Sprühorgan 26, beispielsweise einer Düse oder einem Rotationszerstäuberkopf, am vorderen Ende der Sprühvorrichtung 6. Am vorderen Ende der Sprühvorrichtung 6 kann sich eine Hochspannungselektrode zur elektrostatischen Aufladung des Beschichtungspulvers befinden. Ein Hochspannungserzeuger zur Erzeugung der Hochspannung für die Elektrode kann sich intern oder extern der Sprühvorrichtung 6 befinden.

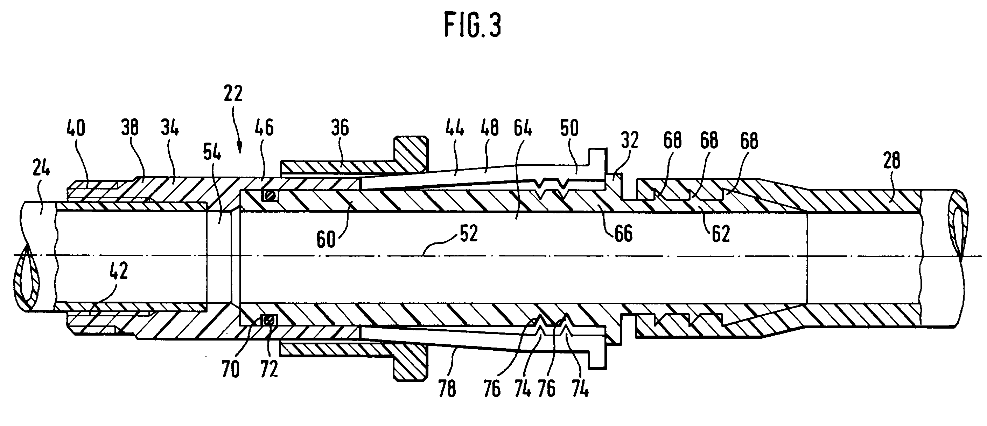

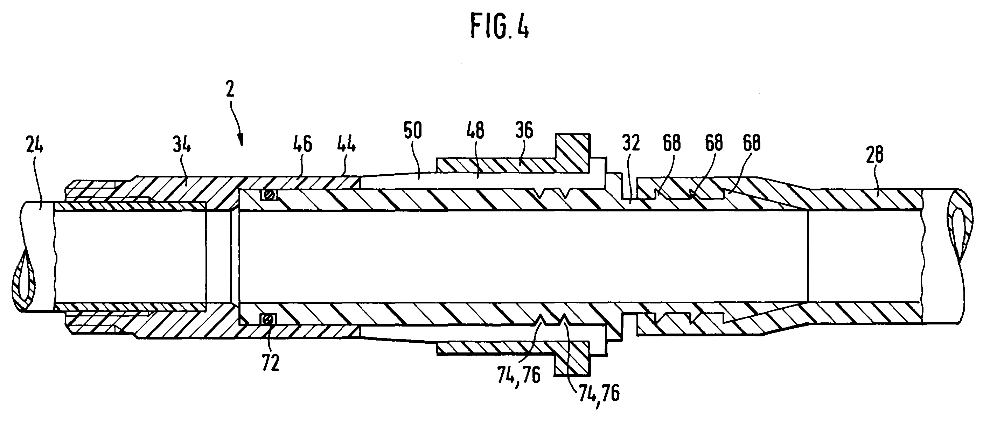

Gemäß den Fig. 3 und 4 ist zusätzlich zur Schlauchkupplung 22 ein Adapter 32 vorgesehen, so daß ein Pulverschlauch wie beispielsweise der Pulverschlauch 28 wahlweise direkt an die Schlauchkupplung 22 angeschlossen oder indirekt über den Adapter 32 an die Schlauchkupplung 22 angeschlossen werden kann.

Die Schlauchkupplung 22 besteht aus einem rohrartigen Innenkörper 34 und einer Spannhülse 36, welche je wesentlich härter und steifer sind als der flexible Pulverschlauch 28. Der Innenkörper 34 hat an seinem einen Ende einen Geräteanschlußstutzen 34 mit einem Außengewinde 40 zum Anschrauben an die Geräteeinheit oder Sprühvorrichtung 6, und ein Innengewinde 42, welches mit Leim zum Anleimen des in den Geräteanschlußstutzen 34 hineinragenden Pulverrohres 24 versehen ist. Der rohrartige Innenkörper 34 ist ferner an seinem anderen Ende als Schlauchanschlußstutzen 44 ausgebildet, der einen axial innen gelegenen Steckfassungsabschnitt 46 und einen axial weiter außen gelegenen Spannbackenabschnitt 48 mit federelastischen Spannbacken 50 aufweist. Die Spannbacken 50 sind quer zur Mittelachse 52 eines Durchgangskanals 54 elastisch biegbar, welcher sich geradlinig durch die Schlauchkupplung 22 erstreckt. Die Spannhülse 36 umgibt den Innenkörper 34 und ist auf ihm zwischen einer die Spannbacken 50 entspannenden Kupplungs-Entriegelungsposition von Fig. 3 und einer die Spannbacken 50 radial nach innen in Richtung zur Mittelachse 52 hin spannenden Kupplungs-Verriegelungsposition von Fig. 4 axial verstellbar.

In der Kupplungs-Entriegelungsposition der Spannhülse 36 bilden die federelastischen Spannbacken 50 einen axial nach außen hin weiter werdenden Trichter, dessen weites, axial äußeres Ende einen Durchmesser wesentlich größer als der Außendurchmesser des Schlauches 28 hat, und dessen enges, axial inneres Ende einen Durchmesser hat, welcher so groß ist wie der Innendurchmesser des Steckfassungsabschnittes 46, der seinerseits wiederum gleich groß oder nur um wenige 1/10 mm größer ist als der Außendurchmesser des Schlauches 28, damit der Schlauch in diesem Steckfassungsabschnitt 46 zwar leicht axial verschiebbar, jedoch sehr eng geführt ist. Während der Innendurchmesser des Steckfassungsabschnittes 46 mit sehr engen Toleranzen genau hergestellt werden kann, ergeben sich bei der Herstellung des Schlauches 28 von Schlauch zu Schlauch Unterschiede im Schlauch-Außendurchmesser. Dadurch besteht die Gefahr, daß der eine Schlauch 28 druckluftdicht in dem Steckfassungsabschnitt 46 sitzt, jedoch ein anderer Schlauch 28 nicht gut sitzt und deshalb Druckluft und Pulver zwischen diesen beiden Teilen in die Außenumgebung entweichen kann. Änderungen des Außendurchmessers des Schlauches 28 können sich auch bei Temperaturänderungen und durch Materialalterung ergeben.

Eine Pulver-Sprühbeschichtungsanlage verwendet häufig wechselweise unterschiedliche Pulversorten, insbesondere unterschiedliche Pulverfarben. Bei einem solchen Pulverwechsel oder Farbwechsel darf keine Vermischung der verschiedenen Pulversorten stattfinden, weil dies zu Fehlern in der Beschichtung des zu beschichteten Gegenstandes führen würde. Damit zur Reinigung der Gerätevorrichtungen und der Schläuche bei einem Pulverwechsel nicht zuviel Zeit verloren wird, werden für jede Pulversorte verschiedene Schläuche 28 und/oder verschiedene Geräteeinheiten 6 beziehungsweise Sprühpistolen verwendet, oder zumindestens je zwei Stück, damit mit dem einen Stück der Beschichtungsbetrieb weitergeführt werden kann, während das andere Stück gereinigt wird.

Für den Fall, daß die Gefahr besteht, daß die Schläuche 38 nur theoretisch gleich Außerdurchmesser haben, jedoch in der Praxis durch Herstellungsunterschiede oder Temperaturschwankungen unterschiedliche Außendurchmesser haben, ist gemäß der Erfindung der Adapter 32 vorgesehen.

Der Adapter 32 hat axial hintereinander angeordnet einen Steckerabschnitt 60 und einen zweiten Schlauchanschlußstutzen 62. Durch beide erstreckt sich geradlinig eine Durchgangsöffnung 64, welche gemäß den Fig. 3 und 4 koaxial zum Durchgangskanal 54 der Schlauchkupplung 34 angeordnet ist, wenn der Steckerabschnitt 60 des Adapters 32 in den Steckfassungsabschnitt 46 der Schlauchkupplung 34 eingesteckt ist. Der Steckerabschnitt 60 ist komplementär zum Steckfassungsabschnitt 46 ausgebildet und hat einen im wesentlichen gleich großen, maximal wenige 1/10 mm kleineren Durchmesser als der Steckfassungsabschnitt 46, damit diese beiden Teile zusammen eine druckluftdichte Passung an ihren einander gegenüberliegenden Mantelflächen bilden. Der Steckerabschnitt 60 ist durch den Spannbackenabschnitt 48 hindurch in den Steckfassungsabschnitt 46 einsteckbar. Der Adapter 32 hat zwischen seinem Steckerabschnitt 60 und seinem Schlauchanschlußstutzen 62 einen Verriegelungsabschnitt 66, mit welchem die Spannbacken 50 durch axiales Verschieben des Spannringes 36 verriegelbar gemäß Fig. 4 oder entriegelbar gemäß Fig. 3 sind, so daß der Adapter 32 anstelle eines Schlauches 28 mit der Kupplung verbunden werden kann.

Der zweite Schlauchanschlußstutzen 62 des Adapters 32 ist unlösbar oder schlecht lösbar mit dem auf ihn aufgesteckten Endabschnitt des Pulverschlauches 28 verbunden, vorzugsweise verschweißt, anvulkanisiert, angeklebt und/oder durch krallenartige oder widerhakenartige Vorsprünge 68, welche ein verhältnismäßig leichtes Aufstecken des Schlauches 28 auf den Schlauchanschlußstutzen 62 von Hand ermöglichen, sich jedoch so stark in die Innenumfangsfläche des Schlauches 28 einkrallen oder einhaken, daß der Schlauch 28 anschließend nur schwer wieder vom Schlauchanschlußstutzen 62 abgezogen werden kann. Wenn der Schlauch 28 mit Gewalt vom zweiten Schlauchanschlußstutzen 62 des Adapters 32 abgerissen wird, dann wird der Schlauch 28 zumindest an seiner Innenumfangsfläche durch die krallenartigen oder widerhakenartigen Vorsprünge 68 beschädigt. Bei der dargestellten bevorzugten Ausführungsform haben die am Adapter 32 mit ihm einstückig gebildeten Vorsprünge 68 eine widerhakenartige Form, mit Widerhakenspitzen, welche in Richtung schräg von der Adapter-Mittelachse 52 nach außen und in Richtung von seinem zweiten Schlauchanschlußstutzen 62 zu seinem Steckerabschnitt 60 hin gerichtet sind und dadurch ein relativ leichtes Aufstecken des Schlauchendes auf diesen zweiten Schlauchanschlußstutzen 62 über seine widerhakenartige Vorsprünge 68 hinweg erlauben, im wesentlichen ohne Widerhakenwirkung, sich jedoch bei dem Versuch, das Schlauchende vom Adapter 32 wieder abzuziehen, in den Pulverschlauch 28 festkrallen oder einhaken.

Der Adapter 32 besteht aus wesentlich härterem und weniger flexiblen Material als der Pulverschlauch 28 und kann dadurch wesentlich genauer, ohne störende Maßschwankungen zwischen den einzelnen Stückzahlen, hergestellt werden. Wenn er aus dem gleichen Material herstellt wird wie der rohrartige Innenkörper 34 der Schlauchkupplung 22, dann haben auch Temperaturschwankungen keinen negativen Einfluß auf die Dichtungswirkung zwischen dem Steckerabschnitt 60 des Adapters 32 und dem Steckfassungsabschnitt 46 der Schlauchkupplung 22.

Der zweite Schlauchanschlußstutzen 62 des Adapters 32 ist zu seinem äußeren Ende hin bis auf ungefähr den Innendurchmesser des nicht-aufgeweiteten Pulverschlauches 28 hin verjüngt ausgebildet, damit der Pulverschlauch 28 leichter auf den zweiten Schlauchanschlußstutzen 62 aufgesteckt werden kann und damit er anschließend darauf und auf den widerhakenartigen Vorsprüngen 68 fest verankert sitzt.

Der Steckerabschnitt 60 ist an seinem Außenumfang mit einer Außenumfangsnut 70 versehen, in welcher ein Dichtungsring 72 gelagert ist, welcher eine druckluftdichte Abdichtung zwischen der äußeren Mantelfläche des Steckerabschnittes 60 und der Innenumfangsfläche des Steckfassungsabschnitts 46 der Schlauchkupplung 22 bildet oder eine solche Dichtung verbessert. Gemäß abgewandelten Ausführungsformen können auch mehrere Ringdichtungen 72 oder andere Dichtungsarten wie beispielsweise eine Labyrithdichtung vorgesehen werden.

Damit die Spannbacken 50 den Pulverschlauch 28 oder, bei Verwendung des Adapters 32, den Adapter 32 nicht nur durch Klemmwirkung festhalten müssen, sondern auch durch eine formschlüssige Verbindung, welche eine größere Sicherheit gegen ein ungewolltes Trennen gibt, sind sie auf ihrer der Mittelachse 52 zugewandten radial inneren Seite mit einem oder mehreren ringförmigen oder andersförmigen Verriegelungs-Vorsprüngen 74 versehen. Die Verriegelungs-Vorsprünge 74 und die Spannbacken 50 bestehen aus einem Stück. Die Verriegelungs-Vorsprünge 74 der Spannbacken 50 liegen radial außerhalb und gegenüber von Verriegelungs-Ausnehmungen 76, welche in einer Außenumfangsfläche des Verriegelungs-Abschnittes 66 des Adapters 32 gebildet sind. Die Verriegelungs-Vorsprünge 74 liegen auf einem größeren Durchmesser als die Außenumfangsfläche des Verriegelungs-Abschnittes 66 und des Steckerabschnittes 60 des Adapters 32, wenn sich die Spannhülse 36 in der in Fig. 3 dargestellten, von den Verriegelungs-Vorsprüngen 74 axial entfernten Entriegelungsposition befindet. Wenn die Spannhülse 36 von der Entriegelungsposition von Fig. 3 auf einer radial äußeren Nockenfläche 78 der Spannbacken 50 axial nach rechts bis über die Verriegelungs-Vorsprünge 74 in die in Verriegelungsposition von Fig. 4 verschoben wird, drückt die Spannhülse 36 die Spannbacken 50 mit ihren Verriegelungs-Vorsprüngen 74 radial nach innen in die Verriegelungs-Ausnehmungen 76 des Adapters 32. Jetzt kann der Adapter 32 nicht mehr aus der Schlauchkupplung 22 herausgezogen werden. Die Verriegelungs-Ausnehmungen 76 können ringförmige Nuten und die Verriegelungs-Vorsprünge können komplementar dazu ringbogenförmige Rippen sein oder je eine andere Form haben.

Damit die Verriegelungs-Vorsprünge 74 auch bei Herstellungsungenauigkeiten in die Verriegelungs-Ausnehmungen 76 eingreifen, und damit die Verriegelungs-Vorsprünge 74 in die äußere Mantelfläche des Pulverschlauches 28 eingedrückt werden können, wenn der Pulverschlauch 28 ohne einen Adapter 32 in den Steckfassungsabschnitt 46 der Schlauchkupplung 22 eingesteckt wird, haben die Verriegelungs-Vorsprünge 74 vorzugsweise die in Fig. 3 und 4 dargestellte oder eine ähnliche keilförmige oder krallenförmige Form.

Der Adapter 32 ist vorzugsweise ein einstückiger Körper. Er besteht vorzugsweise aus Metall oder aus Kunststoff, beispielsweise aus Polyamid oder Polyacethal.

Der rohrartige Innenkörper 34 der Schlauchkupplung 32 besteht einschließlich seines Geräteanschlußstutzens 38 und seines Kupplungsanschlußstutzens 44 mit den Spannbacken 50 ebenfalls aus einem einstückigen Körper aus Metall oder vorzugsweise Kunststoff, beispielsweise aus Polyamid oder Polyacethal. Selbstverständlich können auch andere Kunststoffe verwendet werden, die sich leicht bearbeiten lassen und mit dem Beschichtungspulver verträglich sind.

## Patentansprüche

1. Pulver-Sprühbeschichtungsvorrichtung mit mindestens einer Vorrichtungseinheit (6) und mindestens einem austauschbar an dieser Vorrichtungseinheit (6) befestigbaren flexiblen Pulverschlauch (28) zur pneumatischen Pulverförderung zu oder von dieser Vorrichtungseinheit (6),
**gekennzeichnet durch** folgende Merkmale: Die Verwendung einer Schlauchkupplung (22) und eines Adapters (32); die Schlauchkupplung (22) besteht aus einem rohrartigen Innenkörper (34) und einer Spannhülse (36), welche je wesentlich härter und steifer sind als der flexible Pulverschlauch; der Innenkörper (34) hat an seinem einen Ende einen an der Vorrichtungseinheit (6) befestigbaren Geräteanschlußstutzen (34) und an seinem anderen Ende einen Schlauchanschlußstutzen (44); der Schlauchanschlußstutzen (44) hat einen axial innen gelegenen Steckfassungsabschnitt (46) und einen axial weiter außen gelegenen Spannbackenabschnitt (48) mit federelastischen Spannbacken (50), welche quer zur Mittelachse (52) eines Durchgangskanals (54) federelastisch biegbar sind; die Spannhülse (36) umgibt den Innenkörper (34) und ist auf ihm axial verstellbar zwischen einer die Spannbacken (50) entspannenden Kupplungs-Entriegelungsposition (Fig. 3) und einer die Spannbacken (50) radial nach innen in Richtung zur Mittelachse (52) hin spannenden Kupplungs-Verriegelungsposition (Fig. 4); der Adapter (32) hat axial hintereinander angeordnet einen Steckerabschnitt (60) und einen zweiten Schlauchanschlußstutzen (62) sowie eine durch beide hindurchgehende Durchgangsöffnung (64) mit der gleichen Mittelachse (52); der Steckerabschnitt (60) ist komplementär zum Steckfassungsabschnitt (46) und in diesen durch den Spannbackenabschnitt (48) hindurch einsteckbar ausgebildet, wobei zwischen dem Steckerabschnitt (60) und dem Steckfassungsabschnitt (46) der Schlauchkupplung (22) eine fluiddichte Verbindung gebildet wird; der Adapter (32) hat zwischen seinem Steckerabschnitt (60) und seinem zweiten Schlauchanschlußstutzen (62) einen Verriegelungsabschnitt (66), mit welchem die Spannbacken (50) durch axiales Verschieben des Spannringes (32) verriegelbar oder entriegelbar sind; der zweite Schlauchanschlußstutzen (62) des Adapters (32) ist mit Mitteln (68) zur unlösbaren oder schlecht-lösbaren Steckverbindung mit einem Ende des Pulverschlauches (28) versehen.

2. Pulver-Sprühbeschichtungsvorrichtung nach Anspruch 1,
**dadurch gekennzeichnet,** daß die Mittel zur unlösbaren oder schlecht-lösbaren Verbindung des Adapters mit dem Pulverschlauch am Adapter gebildete, widerhakenartige Vorsprünge (68) aufweisen, mit Widerhakenspitzen, welche in Richtung schräg von der Adapter-Mittelachse (52) nach außen und in Richtung vom zweiten Schlauchanschlußstutzen (62) zum Steckerabschnitt (60) hin gerichtet sind und dadurch ein leichtes Aufstecken des Schlauchendes auf den Adapter (32) ohne wesentliche Widerhakenwirkung erlauben, sich jedoch beim Versuch, das Schlauchende vom Adapter (32) abzuziehen, in den Pulverschlauch (28) festkrallen oder einhaken.

3. Pulver-Sprühbeschichtungsvorrichtung nach Anspruch 2,
**dadurch gekennzeichnet,** daß der zweite Schlauchanschlußstutzen (62) des Adapters (32) zu seinem äußeren Ende hin verjüngt ausgebildet ist.

4. Pulver-Sprühbeschichtungsvorrichtung nach einem der vorhergehenden Ansprüche,
**dadurch gekennzeichnet,** daß zwischen dem Steckfassungsabschnitt (46) der Schlauchkupplung (22) und dem Steckerabschnitt (60) des Adapters (32) mindestens eine Ringdichtung (72) angeordnet ist.

5. Pulver-Sprühbeschichtungsvorrichtung nach Anspruch 4,
**dadurch gekennzeichnet,** daß die Ringdichtung (72) in einer Außenumfangsnut (70) des Steckerabschnittes (60) gelagert ist.

6. Pulver-Sprühbeschichtungsvorrichtung nach einem der vorhergehenden Ansprüche,
**dadurch gekennzeichnet,** daß die Spannbacken (50) je mindestens einen in Richtung zur Mittelachse (52) hin von ihnen wegragenden Verriegelungs-Vorsprung (74) haben, der in eine Verriegelungs-Ausnehmung (76) in der Außenumfangsfläche des Adapters (32) eingreift, wenn die Spannbacken (50) durch den Spannring (36) in der Verriegelungsposition radial nach innen gespannt werden, jedoch durch die Federelastizität der Spannbacken (50) sich auf einen größeren Durchmesser als der Außendurchmesser des Steckerabschnittes (60) selbsttätig zurückbewegen, wenn der Spannring (36) die Spannbacken (50) in der Entriegelungsposition entspannt.

7. Pulver-Sprühbeschichtungsvorrichtung nach einem der vorhergehenden Ansprüche,
**dadurch gekennzeichnet,** daß der Adapter (32) ein einstückiger Körper ist.

8. Pulver-Sprühbeschichtungsvorrichtung nach einem der vorhergehenden Ansprüche,
**dadurch gekennzeichnet,** daß der rohrartige Innenkörper (34) der Schlauchkupplung (22) einschließlich seines Geräteanschlußstutzens (38) und seines Schlauchanschlußstutzens (44) mit dem Steckfassungsabschnitt (46) und mit den Spannbacken (50) aus einem einstückigen Körper besteht.
